Europäisches Patentamt

European Patent Office

Office européen des brevets

(19)

(11) Veröffentlichungsnummer: **0 354 304 B1**

# (12) EUROPÄISCHE PATENTSCHRIFT

(45) Veröffentlichungstag der Patentschrift: **10.11.93**

(21) Anmeldenummer: **89108705.8**

(22) Anmeldetag: **16.05.89**

(51) Int. Cl.5: **C04B 35/10**, C04B 35/58, B22D 41/00, B22D 11/10, C04B 35/66

(54) **Eintauchausgüsse für Metallschmelzen.**

(30) Priorität: **12.08.88 DE 3827424**

(43) Veröffentlichungstag der Anmeldung:
**14.02.90 Patentblatt 90/07**

(45) Bekanntmachung des Hinweises auf die
Patenterteilung:
**10.11.93 Patentblatt 93/45**

(84) Benannte Vertragsstaaten:
**BE DE ES FR GB IT**

(56) Entgegenhaltungen:
**EP-A- 0 262 687
DE-A- 3 003 046
DE-A- 3 016 971
DE-A- 3 534 824
DE-C- 3 505 422**

(73) Patentinhaber: **DIDIER-WERKE AG
Lessingstrasse 16-18
D-65189 Wiesbaden(DE)**

(72) Erfinder: **Lührsen, Ernst
Danziger Strasse 5
D-6208 Bad Schwalbach(DE)**
Erfinder: **Ott, Albert
Auf der Lai 1c
D-6273 Waldems-Wüstems(DE)**

(74) Vertreter: **Brückner, Raimund, Dipl.-Ing.
c/o Didier-Werke AG
Lessingstrasse 16-18
D-65189 Wiesbaden (DE)**

**Beschreibung**

Die Erfindung geht aus von einem Verfahren zur Herstellung eines feuerfesten Eintauchausgusses für Metallschmelzen, insbesondere Stahlschmelzen, aus einer Aluminiumoxid, Kohlenstoff und Bornitrid umfassenden Ausgangsmischung unter Verwendung wenigstens eines Flußmittels, eines Bindemittels und gegebenenfalls weiterer üblicher Zusatzstoffen, durch Anmachen der Ausgangsmischung mit Flüssigkeit, Formen, Trocknen und gegebenenfalls Brennen des Formkörpers.

Eintauchausgüsse werden bei der Weiterverarbeitung von Metallschmelzen, insbesondere beim Stranggießen von Stahl, eingesetzt. Aus der DE-PS 30 03 046 ist eine keramische Masse auf der Basis von Aluminiumoxid oder Zirkonoxid oder Siliziumoxid, Kohlenstoff und Bindemitteln zur Herstellung solcher Tauchausgüsse bekannt, welche 5 bis 15 Gew.-% Calciumsilizium und/oder Ferrosilizium und/oder Bornitrid enthält. Durch das Bornitrid soll eine Schmelzpunkterniedrigung der im Stahl vorhandenen festen oxidischen Suspensionen, z.B. Tonerdeteilchen von 1 bis 30 mm, erreicht werden, so daß diese flüssig werden und nicht an der Feuerfestwand haften. Eine Mischung von verschiedenen Feuerfestmaterialien wird in dieser DE-PS 30 03 046 jedoch nicht vorgeschlagen, weiterhin ist nichts über die Korngröße des verwendeten Korunds (Aluminiumoxids) ausgesagt. Weiterhin ist aus der DE-OS 34 39 954 ein feuerfestes Verschleißteil zum Vergießen flüssiger Schmelzen bekannt, welches aus einer Mischung von $Al_2O_3$, Graphit, einer Flußmittelkombination und einem kohlenstoffhaltigen Bindemittel sowie einem metallischen Pulver hergestellt wird und bei welchem das gebrannte Verschleißteil ganz oder teilweise roh glasiert und gegebenenfalls anschließend oxidierend gebrannt wird. Als Feuerfeststoff wird bei der Herstellung dieses feuerfesten Verschleißteils jedoch nur Aluminiumoxid eingesetzt, und es wird kein Bornitrid verwendet. Aus der DE-PS 34 01 999 sind Tauchausgüsse bekannt, bei welchem eine Schicht aus Bornitrid auf die mit dem Stahl in Berührung kommenden Flächen aufgebracht wird.

Bei der Verwendung von Eintauchausgüssen ist insbesondere bei Stahlschmelzen das bereits zuvor angegebene Problem des Haftens von in der Stahlschmelze enthaltenen oxidischen Bestandteilen gegeben, wodurch eine Zusammenwachsen (clogging) des Eintauchausgusses erfolgen kann, was zu einer Unterbrechung des Vergießens der Metallschmelzen führt. Möglichst lange Gießzeiten sind jedoch aus Kostengründen unbedingt erforderlich. Ein weiteres Problem bei Eintauchausgüssen ist deren Temperaturwechselbeständigkeit, welche ausreichend hoch liegen soll, damit eine Rißbildung und ein vorzeitliches Auswechseln der Eintauchausgüsse vermieden wird.

Es wurde nun gefunden, daß bei Eintauchausgüssen durch die Verwendung von möglichst feinkörnigem Aluminiumoxid in Verbindung mit Flußmitteln und Bornitrid ein solches Anwachsen von oxidischen Schlackenbestandteilen der Metallschmelze zwar vermieden werden kann, daß bei Verwendung von feinem Aluminiumoxid jedoch die Temperaturwechselbeständigkeit schlechter wird. Üblicherweise wurde Aluminiumoxid, falls es zur Herstellung von Eintauchausgüssen verwendet wurde, bislang mit Korngrößen bis 0,5 mm eingesetzt. Bei Einsatz von solch grobkörnigem Aluminiumoxid erfolgte jedoch immer eine Anlagerung von oxidischen Bestandteilen, insbesondere von Aluminiumoxid aus dem Stahl.

Aufgabe der vorliegenden Erfindung ist daher die Bereitstellung eines Eintauchausgusses, welcher nicht nur eine verminderte Neigung zum Anwachsen bzw. Zuwachsen (clogging) zeigt, sondern der auch eine ausreichend hohe Temperaturwechselbeständigkeit besitzt.

Zur Lösung der Aufgabe dient das Verfahren zur Herstellung eines Eintauchausgusses der zuvor beschriebenen Art, welches dadurch gekennzeichnet ist, daß man

a) einen Teil des eingesetzten Aluminiumoxids durch die anderen Zuschlagstoffe Mullit, Siliziumcarbid, Siliciumnitrid oder Schmelzkalk, die weniger als Aluminiumoxid zu einer Ansatzbildung neigen, im Gewichtsverhältnis Aluminiumoxid zu den anderen Zuschlagstoffen von 30:70 bis 70:30 ersetzt, und

b) Aluminiumoxid mit einer maximalen Korngröße von 250 $\mu$m verwendet.

Die anderen Zuschlagstoffe können jeweils einzeln oder auch als Mischung zusammen mit dem Aluminiumoxid eingesetzt werden.

Durch das Gewichtsverhältnis von Aluminiumoxid zu den anderen Zuschlagstoffen 30 : 70 bis 70 : 30 wird erreicht, daß einerseits die guten Feuerfesteigenschaften von Aluminiumoxid zum Tragen kommen, andererseits eine ausreichende Temperaturwechselbeständigkeit durch Verwendung der anderen Zuschlagstoffe erreicht wird.

Durch die Kombination von feinkörnigerem Aluminiumoxid und den grobkörnigeren anderen Zuschlagstoffen wird erreicht, daß die Temperaturwechselbeständigkeit des fertigen Eintauchausgusses verbessert wird, so daß nicht nur das Problem des Zuwachsens des Eintauchausgusses, sondern auch das Problem einer guten Temperaturwechselbeständigkeit erreicht wird, die mindestens so gut ist, wie bei einem mit grobkörniger Tonerde hergestellten Eintauchausguß.

Das bei dem erfindungsgemäßen Verfahren eingesetzte Aluminiumoxid kann ein übliches, für Feuerfestzwecke verwendetes Material sein, z.B. entsprechend feinkörniger Schmelzkorund oder Tabulartonerde.

Gemäß einer vorteilhaften Ausführungsform wird Aluminiumoxid mit einer maximalen Korngröße von 150 $\mu$m und die anderen Zuschlagstoffe mit einer Mindestgröße von 150 $\mu$m verwendet. In weiterer vorteilhafter Ausführungsform wird Aluminiumoxid mit einer maximalen Korngröße von 90 $\mu$m und die anderen Zuschlagstoffe mit einer Mindestkorngröße von 90 $\mu$m verwendet. Ferner kann man Aluminiumoxid mit einer maximalen Korngröße von 44 $\mu$m und die anderen Zuschlagstoffe mit einer Mindestkorngröße von 44 $\mu$m verwenden.

Je geringer die maximale Korngröße des verwendeten Aluminiumoxids ist, desto geringer wird die Neigung zum Anhaften von oxidischen Bestandteilen aus der Metallschmelze, andererseits besteht durch ein zu feinkörniges Gefüge die Neigung zu einer Verschlechterung der Temperaturwechselbeständigkeit. Daher werden die anderen Zuschlagstoffe, die weniger als Aluminiumoxid zu einer Ansatzbildung neigen, mit gröberer Körnung als das verwendete Aluminiumoxid eingesetzt. Die Korngröße dieser anderen Zuschlagstoffe reicht bis zu einer Maximalkorngröße von 1,0 mm, bevorzugt 0,5 mm, d.h. ihre Korngröße entspricht den üblichen bei der Herstellung solcher Eintauchausgüsse verwendeten Korngrößen.

Gemäß einer weiteren bevorzugten Ausführungsform kann als weiterer Zusatzstoff Graphit und/oder metallisches Silizium zu der Ausgangsmischung zugesetzt werden. Als Graphit wird vorteilhafterweise Flockengraphit verwendet, das metallische Silizium wird überlicherweise in fein zerteilter Form, d.h. mit einer maximalen Korngröße von 0,2 mm eingesetzt. Durch die Verwendung von Flockengraphit kann teures Bornitrid gespart werden. Metallisches Silizium dient zur Verfestigung und zum Oxidationsschutz der Kohlenstoffbindung.

Bei der Herstellung der erfindungegemäßen Eintauchausgüsse wird wenigstens ein Flußmittel verwendet, wobei dies aus den üblicherweise bei der Herstellung von Eintauchausgüssen verwendeten Flußmitteln ausgewählt werden kann. Hierbei kann es sich um borfreie oder borhaltige Flußmittel handeln, Beispiele hierfür sind Glasfritten, Feldspäte, Borsäure, Borax, etc..

Gemäß einer bevorzugten Ausführungsform wird als Flußmittel eine Flußmittelkombination aus einer Glasfritte und einem Alkalifeldspat verwendet. Die verwendete Glasfritte kann entweder eine borhaltige Glasfritte sein, z.B. eine Glasfritte mit einer ungefähren Oxidzusammensetzung von 30 % $SiO_2$, 6 % $Al_2O_3$, 4 % $Fe_2O_3$, 8 % $CaO$, 1 % $MgO$, 0,4 % $Mn_3O_4$, 25 % $Na_2O$, 2 % $P_2O_5$, 3,2 % $BaO$ und 20 % $B_2O_3$. Weiterhin ist es ebenfalls möglich, sogenannte Glasfritten zu verwenden, z.B. mit einer ungefähren Oxidzusammensetzung von 66 % $SiO_2$, 23 % $Al_2O_3$, 5 % $CaO$, 4 % $ZnO$ und 2 % $Li_2O$. Bei Verwendung solcher borfreien Glasfritten wird vorteilhafterweise noch ein borhaltiges Flußmittel, wie sie zuvor genannt wurden, eingesetzt.

Bei der Herstellung der erfindungsgemäßen Eintauchausgüsse wird ebenfalls ein übliches temporäres Bindemittel verwendet. Gemäß einer vorteilhaften Ausführungsform wird als temporäres Bindemittel ein Harz, insbesondere ein Kunstharz in Form eines Novolaks oder ein Resolharz, oder auch ein übliches Pech verwendet, wobei Kunstharz und Pech auch als Mischung eingesetzt werden können. Bei Verwendung eines härtbaren Kunstharzes kann ein geeigneter Härter, z.B. Hexamethylentetramin, in der zur Aushärtung des zugesetzten Kunstharzes erforderlichen Menge zugesetzt werden, beispielsweise bei Verwendung von Novolaken. Bei Verwendung von Resolharzen ist ein Härterzusatz überlicherweise nicht erforderlich.

Das bei der Herstellung der erfindungsgemäßen Eintauchausgüsse verwendete, hexagonale Bornitrid wird überlicherweise in feinkörniger Form, d.h. mit einer Korngröße unterhalb von 100 $\mu$m verwendet.

Die Menge des zugesetzten Bornitrids, bezogen auf trockene Ausgangsmischung, liegt im Bereich von 5 bis 30 und vorteilhafterweise im Bereich von 8 bis 25 Gwe.-%. Die Mengen an gegebenenfalls zugesetztem metallischen Silizium liegen in den üblichen Bereichen von 3 bis 8 Gew.-%, bezogen auf die trockene Ausgangsmischung, und die Mengen an Graphit im Bereich von 0 bis 20 Gew.-%.

Die Flußmittel werden in Mengen zwischen 2 und 12 Gew.-%, bezogen auf die trockene Ausgangsmischung, verwendet.

Das temporäre Bindemittel wird im allgemeinen in Mengen von 5 bis 20 Gew.-%, bezogen auf die trockene Ausgangsmischung eingesetzt.

Die Erfindung wird anhand der folgenden Beispiele näher erläutert.

Beispiel 1

Es wurde eine Ausgangsmischung aus 12 Gew.-Teilen Edelkorund mit einer maximalen Korngröße von 120 $\mu$m, 14,5 Gew.-Teile Tabulartonerde mit einer maximalen Korngröße von 44 $\mu$m, 19,5 Gew.-Teile Siliciumcarbid mit einer Krongröße von 0,09 bis 0,5 mm, 6,5 Gew.-Teile Feldspat, 1,5 Gew.-Teile Borax, 2,5 Gew.-Teile einer borhaltigen Glasfritte mit einem Gehalt von $B_2O_3$ von 20 %, 15 Gew.-Teile Flockengraphit, 10 Gew.-Teile Bornitrid mit einer maximalen Korngröße von 100 μm und 5 Gew.-Teile fein zerteiltes Silizium mit einer maximalen Korngröße von 75 μm wurden in einem Mischer gründlich vorgemischt. Anschließend wurden 13,5 Gew.-Teile einer Resolharzlösung zugesetzt. Die Resolharzlösung war als Anmachflüssigkeit ausreichend.

Nach gründlichem Vermischen wurde aus dem Gemisch ein Eintauchausguß verformt, während 4 Stunden bei 120°C getrocknet und anschließend bei 180°C während 6 Stunden ausgehärtet.

Dieser Ausguß wurde anschließend in reduziernder Atmosphäre langsam aufgeheizt und bei 1000°C während 4 h gebrannt.

Der Eintauchausguß zeigte bei seinem Gebrauch nur eine sehr geringe Neigung zum Anhaften von oxidischen Bestandteilen an den mit flüssigem Stahl in Berührung gekommenen Flächen und besaß eine ausreichend gute Temperaturwechselbeständigekeit.

Beispiele 2 und 3

Die Arbeitsweise von Beispiel 1 wurde mit den in der folgenden Tabelle angegebenen Ausgangsbestandteilen wiederholt, wobei Eintauchausgüsse erhalten wurden, welche ebenfalls nur geringe Neigung zum Anwachsen von Schlackenbestandteilen aus einer Stahlschmelze aufwiesen und eine ausreichend hohe Temperaturwechselbeständigkeit besaßen.

## TABELLE

| Beispiel                          Gew.-Teile | 1 | 2 | 3 |
|---|---|---|---|
| Schmelzkorund, max. 120 μm | 12 | 8 | 0 |
| Schmelzkorund, max.  90 μm |  |  | 10,5 |
| Tabulartonerde, max.  44 μm | 14,5 | 14,5 | 20 |
| Siliciumcarbid, 90-500 μm | 19,5 | – | – |
| Mullit,        44-500 μm | – | 20 | – |
| Schmelzkalk,   90-500 μm | – | – | 20 |
| Flockengraphit | 15 | 15 | 15 |
| Feldspat | 6,5 | 6,5 | 5 |
| Borax | 1,5 | 1,5 | 1,5 |
| borhaltige Glasfritte | 2,5 | 2,5 | – |
| borfreie Glasfritte | – | – | 2,5 |
| Bornitrid, max. 100 μm | 10 | 13 | 7,5 |
| Silicium, max.  75 μm | 5 | 5 | 3 |
| Resol-Harz | 13,5 | 14 | – |
| Novolak-Harz | – | – | 15 |
| Härter (Hexamethylentetramin) | – | – | + 2 |

## Patentansprüche

**1.** Verfahren zur Herstellung eines feuerfesten Eintauchausgusses für Metallschmelzen, insbesondere Stahlschmelzen, aus einer Aluminiumoxid, Kohlenstoff und Bornitrid umfassenden Ausgangsmischung unter Verwendung wenigstens eines Flußmittels, eines Bindemittels und gegebenenfalls weiterer üblichen Zusatzstoffen, durch Anmachen der Ausgangsmischung mit Flüssigkeit, Formen, Trocknen und gegebenenfalls Brennen des Formkörpers,
dadurch gekennzeichnet,
daß man

a) einen Teil des eingesetzten Aluminiumoxids durch die anderen Zuschlagstoffe Mullit, Siliziumcarbid, Siliciumnitrid oder Schmelzkalk, die weniger als Aluminiumoxid zu einer Ansatzbildung neigen, im Gewichtsverhältnis Aluminiumoxid zu den anderen Zuschlagstoffen von 30:70 bis 70:30 ersetzt, und

b) Aluminiumoxid mit einer maximalen Korngröße von 250 μm verwendet.

2. Verfahren nach Anspruch 1,
dadurch gekennzeichnet,
daß man Aluminiumoxid mit einer maximalen Korngröße von 150 μm und die anderen Zuschlagstoffe mit einer Mindestkorngröße von 150 μm verwendet.

3. Verfahren nach Anspruch 2,
dadurch gekennzeichnet,
daß man Aluminiumoxid mit einer maximalen Korngröße von 90 μm und die anderen Zuschlagstoffe mit einer Mindestkorngröße von 90 μm verwendet.

4. Verfahren nach Anspruch 3,
dadurch gekennzeichnet,
daß man Aluminiumoxid mit einer maximalen Korngröße von 44 μm und die anderen Zuschlagstoffe mit einer Mindestkorngröße von 44 μm verwendet.

5. Verfahren nach einem der vorhergehenden Ansprüche,
dadurch gekennzeichnet,
daß man als weiteren Zusatzstoff Graphit und/oder metallisches Silizium verwendet.

6. Verfahren nach einem der vorhergehenden Ansprüche,
dadurch gekennzeichnet,
daß man als Flußmittel eine Flußmittelkombination aus einer Glasfritte und einem Feldspat verwendet.

7. Verfahren nach Anspruch 6,
dadurch gekennzeichnet,
daß man in der Flußmittelkombination weiterhin noch ein borhaltiges Flußmittel verwendet.

8. Verfahren nach einem der vorhergehenden Ansprüche,
dadurch gekennzeichnet,
daß man als temporäres Bindemittel ein Harz und/oder Pech verwendet.

9. Eintauchausguß für Metallschmelzen, insbesondere Stahlschmelzen, hergestellt nach dem Verfahren eines der vorhergehenden Ansprüche.

## Claims

1. Method of manufacturing a refractory immersion nozzle for molten metal, particularly molten steel, from a starting mixture including aluminium oxide, carbon and boron nitride whilst using at least one fluxing agent, a bonding agent and optionally further conventional additives, by mixing the starting mixture with liquid, moulding, drying and optionally firing the moulded body, characterised in that
   (a) a portion of the aluminium oxide which is used is replaced by the other additives mullite, silicon carbide, silicon nitride or fused lime, which have a lesser tendency than aluminium oxide to form deposits, in the weight ratio aluminium oxide to the other additives of 30:70 to 70:30, and
   (b) aluminium oxide is used with a maximum grain size of 250μm.

2. Method as claimed in claim 1, characterised in that aluminium oxide with a maximum grain size of 150μm and the other additives with a minimum grain size of 150μm are used.

3. Method as claimed in claim 2, characterised in that aluminium oxide with a maximum grain size of 90μm and the other additives with a minimum grain size of 90μm are used.

5

**4.** Method as claimed in claim 3, characterised in that aluminium oxide with a maximum grain size of 44μm and the other additives with a minimum grain size of 44μm are used.

**5.** Method as claimed in one of the preceding claims, characterised in that graphite and/or metallic silicon was used as a further additive.

**6.** Method as claimed in one of the preceding claims, characterised in that a fluxing agent combination of a glass frit and a feldspar is used as the fluxing agent.

**7.** Method as claimed in claim 6, characterised in that a boron-containing fluxing agent is additionally used in the fluxing agent combination.

**8.** Method as claimed in one of the preceding claims, characterised in that a resin and/or pitch is used as a temporary bonding agent.

**9.** Immersion nozzle for molten metal, particularly molten steel, manufactured in accordance with the method of one of the preceding claims.

**Revendications**

**1.** Procédé de préparation d'une busette de coulée à immersion, réfractaire, pour des bains de fusion de métaux, en particulier des bains de fusion de l'acier, à partir d'un mélange de départ renfermant de l'oxyde d'aluminium, du carbone et du nitrure de bore, avec utilisation d'au moins un agent fondant, un liant et éventuellement d'autres additifs habituels, par délayage du mélange de départ avec un liquide, formage, séchage et éventuellement calcination de la pièce formée, caractérisé en ce que :
   a) on remplace une partie de l'oxyde d'aluminium utilisé par les autres fondants mullite, carbure de silicium, nitrure de silicium ou chaux de fusion, qui ont moins tendance que l'oxyde d'aluminium à former un dépôt, le rapport en poids de l'oxyde d'aluminium aux autres fondants étant de 30:70 à 70:30, et
   b) on utilise de l'oxyde d'aluminium ayant une grosseur de grain maximale de 250 μm.

**2.** Procédé selon la revendication 1, caractérisé en ce que l'on utilise de l'oxyde d'aluminium ayant une grosseur de grain maximale de 150 μm et en ce que les autres fondants utilisés ont une grosseur de grain minimale de 150 μm.

**3.** Procédé selon la revendication 2, caractérisé en ce que l'on utilise de l'oxyde d'aluminium ayant une grosseur de grain maximale de 90 μm et en ce que les autres fondants utilisés ont une taille de grain minimale de 90 μm.

**4.** Procédé selon la revendication 3, caractérisé en ce que l'on utilise de l'oxyde d'aluminium ayant une grosseur de grain maximale de 44 μm et en ce que les autres fondants utilisés ont une grosseur de grain minimale de 44 μm.

**5.** Procédé selon l'une quelconque des revendications précédentes, caractérisé en ce que l'on utilise, comme autre additif, du graphite et/ou du silicium métallique.

**6.** Procédé selon l'une quelconque des revendications précédentes, caractérisé en ce que l'on utilise, comme agent fondant, une combinaison d'agents fondants, constituée d'une composition vitrifiable et d'un feldspath.

**7.** Procédé selon la revendication 6, caractérisé en ce que l'on utilise en outre, dans la combinaison d'agents fondants, un agent fondant renfermant du bore.

**8.** Procédé selon l'une quelconque des revendications précédentes, caractérisé en ce que l'on utilise, comme liant temporaire, une résine et/ou du brai.

**9.** Busette de coulée à immersion pour des bains de fusion de métaux, en particulier des bains de fusion de l'acier, préparée par le procédé selon l'une quelconque des revendications précédentes.